# FASCICULE DE BREVET EUROPEEN

(11) **EP 2 743 185 B1**
(45) Date de publication et mention de la délivrance du brevet: **07.02.2018**
(21) Numéro de dépôt: 13197358.8
(22) Date de dépôt: 16.12.2013
(51) Int. Cl.: B64D 45/02, H02G 3/32, H02G 13/00

(54) **Système parafoudre comportant une bande parafoudre montée de façon désaxée**
Blitzableitersystem, das ein axial verschoben eingebautes Blitzableiterband umfasst
Lightning-arrester system including a lightning-arrester strip mounted off-centre

(30) Priorité: 17.12.2012 FR 1262124
(43) Date de publication de la demande: 18.06.2014
(73) Titulaire: Airbus Opérations SAS, 31060 Toulouse (FR)
(72) Inventeur: Marty, Jean-Claude, 31000 TOULOUSE (FR); Fournie, Jacques, 31330 GRENADE SUR GARONNE (FR); Bernus, Christophe, 31000 TOULOUSE (FR); Dupas, Thony, 31100 TOULOUSE (FR)
(74) Mandataire: Ilgart, Jean-Christophe

(56) Documents cités:
- EP-A1- 0 579 352
- WO-A1-2007/075141
- DE-U1- 8 715 375
- DE-U1-202010 005 813
- FR-A1- 2 924 686
- US-A1- 2006 035 507

## Description

### DOMAINE TECHNIQUE

La présente invention se rapporte au domaine des systèmes parafoudre. Elle concerne plus spécifiquement un système parafoudre pour une structure support, une structure support et un radôme comportant un tel système parafoudre, ainsi qu'un aéronef comportant un radôme équipé de ce système parafoudre.

L'invention trouve principalement son application dans le domaine de l'aéronautique, notamment pour l'équipement de radômes d'aéronef.

### ÉTAT DE LA TECHNIQUE ANTÉRIEURE

La foudre peut produire d'importants dommages aux aéronefs en vol, par exemple des avions de transport civil. Afin de protéger ces aéronefs et de minimiser les dégâts pouvant être occasionnés par la foudre, il est connu de placer des bandes de protection parafoudre sur le radôme des aéronefs, situé en pointe avant du fuselage. Généralement, ce radôme permet de protéger un radar, et de ce fait, est typiquement réalisé dans un matériau perméable aux ondes électromagnétiques, par exemple un matériau composite électriquement isolant, le plus souvent plus souple et plus déformable que la structure du fuselage sur lequel est fixé ce radôme.

Un premier type de système de protection parafoudre connu consiste à placer des bandes de protection parafoudre, en particulier sous forme de bandes métalliques, sur la face externe (ou peau externe) du radôme. Afin de minimiser les problèmes d'aérodynamisme liés à la présence de bandes métalliques en surface du radôme, celles-ci sont disposées de façon radiale, partant de la périphérie du radôme et visant la pointe de celui-ci. Les bandes métalliques sont en outre électriquement reliées à la masse de l'aéronef. Ainsi, lorsque la foudre frappe le radôme, les bandes métalliques guident la foudre jusqu'à la masse de l'aéronef.

Afin de supprimer tout problème d'aérodynamisme, il a également été envisagé dans l'art antérieur un deuxième type de système de protection parafoudre dans lequel les bandes métalliques sont positionnées à l'intérieur du radôme (sur la peau interne du radôme). La demande de brevet français FR 2 924 686 A1 (correspondant au préambule de la revendication indépendante) décrit un exemple d'un tel système parafoudre pour aéronef comportant des bandes métalliques fixées sur la face interne du radôme. L'attachement de la foudre sur le radôme s'opère alors à l'aide de plots métalliques affleurant la face externe du radôme. Les bandes métalliques sont également disposées de façon radiale sur la face interne du radôme.

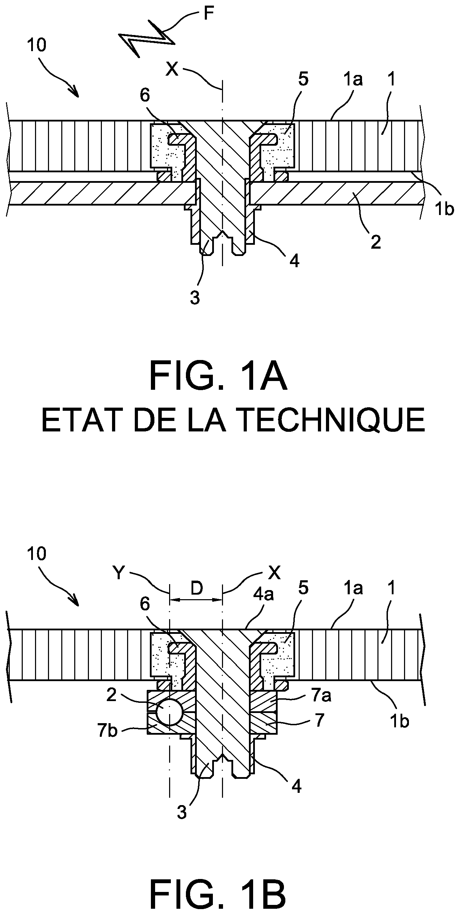

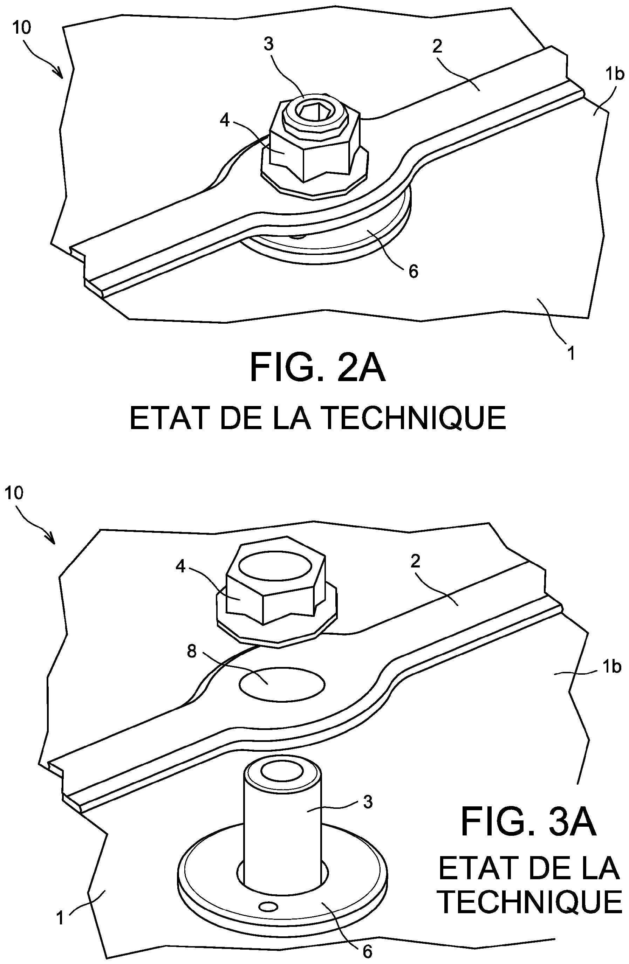

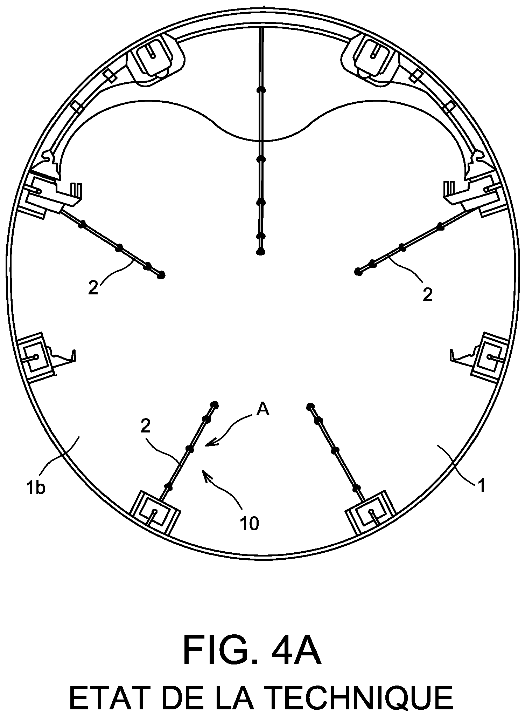

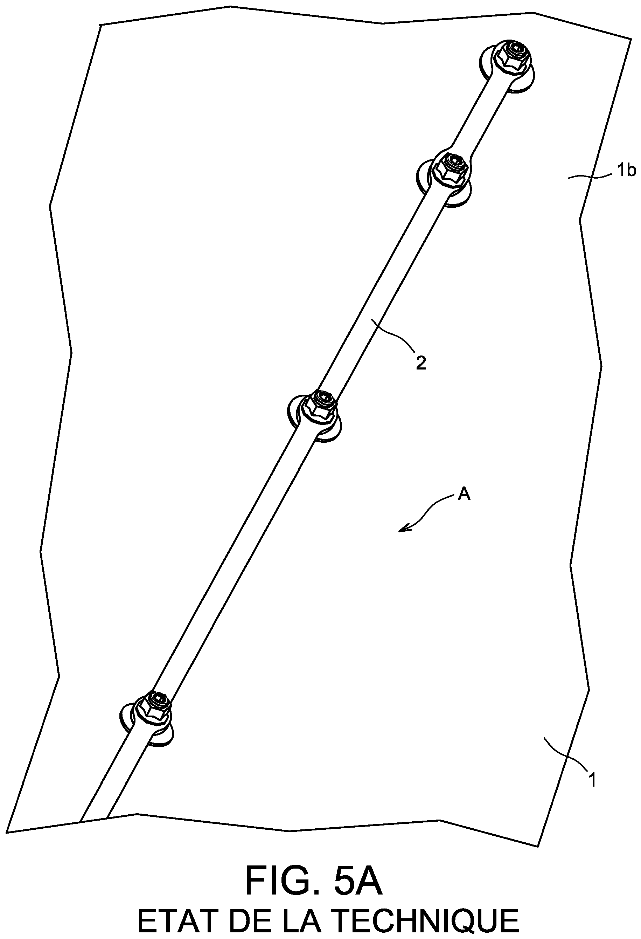

La figure 1A représente, en coupe, un exemple d'un tel système parafoudre 10 du deuxième type selon l'art antérieur. Un plot de fixation métallique 3, en particulier une vis de fixation, d'axe principal X, relie la face externe la du radôme 1 à une bande parafoudre métallique interne 2, en particulier trapézoïdale, pourvue d'un orifice de passage 8 (visible sur la figure 3A) pour le plot de fixation 3 et située sur la face interne 1b du radôme 1. Le plot de fixation 3 est fixé dans la paroi du radôme 1 via un insert 6 (ou entretoise) et une résine de fixation 5. La bande parafoudre 2 est vissée au plot de fixation 3 à l'aide d'un écrou de fixation 4. La foudre F qui frappe le plot de fixation 3 du côté de la face externe la du radôme 1 est guidée jusqu'à la bande parafoudre 2 située du côté de la face interne 1b du radôme 1. Les figures 2A et 3A montrent en perspective, respectivement dans une configuration assemblée et dans une configuration éclatée, le système parafoudre 10 de la figure 1A, tandis que la figure 4A représente, en vue de face, un exemple de radôme 1 comportant une pluralité de systèmes parafoudre 10 selon l'art antérieur et que la figure 5A représente une vue agrandie de la partie A de la figure 4A.

Si ce deuxième type de système parafoudre 10 permet de résoudre tout problème d'aérodynamisme, cette solution n'est pas entièrement satisfaisante, notamment pour les raisons exposées ci-après. En effet, la conception de ce système parafoudre 10 de l'art antérieur entraîne généralement une complexité dans l'usinage et l'assemblage des bandes parafoudre 2 et, de ce fait, une augmentation des coûts. En particulier, les axes principaux X des plots de fixation 3 sont confondus avec les axes de perçage des bandes parafoudre 2, si bien que les plots de fixation 3 et les bandes parafoudre 2 sont liés les uns aux autres et imposent des tolérances précises et un montage compliqué des systèmes parafoudre 10. De plus, comme on peut le constater sur la figure 5A, la solution de l'art antérieur peut engendrer des difficultés de localisation lors de la fixation des bandes parafoudre 2 sur le radôme 1. En effet, lors du montage, il faut pouvoir s'assurer que l'ensemble des orifices formés dans la paroi du radôme 1 pour le passage des plots de fixation 3 soient en vis-à-vis des orifices formées dans les bandes parafoudre 2 et alors, en cas d'écart trop important, il faut parfois effectuer des ajustements complexes et coûteux. En outre, les bandes parafoudre 2 de ce système parafoudre 10 de l'art antérieur peuvent encore présenter un défaut trop important de barrière radioélectrique vis-à-vis des ondes radars du radôme 1.

Par ailleurs, le modèle d'utilité DE 20 2010 005 813 U1 décrit la réalisation d'un étrier de serrage en une seule pièce, capable de supporter la foudre, comportant un logement pour le passage d'un câble. En outre, le modèle d'utilité DE 87 15 375 U1 décrit une autre réalisation d'un étrier de serrage permettant le serrage multiple de câbles.

### EXPOSÉ DE L'INVENTION

L'invention a pour but de remédier au moins partiellement aux besoins mentionnés ci-dessus et aux inconvénients relatifs aux réalisations de l'art antérieur.

L'invention vise notamment à permettre une simplification du montage et une diminution du défaut radioélectrique des systèmes parafoudre équipant un radôme.

L'invention a ainsi pour objet, suivant les caractéristiques techniques de la revendication indépendante 1 et selon l'un de ses aspects, une structure support ayant une face externe destinée à être soumise à un écoulement d'air et une face interne opposée à la face externe, le système parafoudre comportant :
- une bande parafoudre électriquement conductrice, destinée à être placée du côté de la face interne de la structure support en étant reliée à la masse,
- des moyens de fixation de la bande parafoudre à la structure support, les moyens de fixation comportant des plots de fixation destinés à être insérés dans des orifices réalisés dans la structure support, ces plots de fixation étant en contact électrique avec la bande parafoudre,
caractérisé en ce que la bande parafoudre est montée de façon désaxée par rapport aux axes principaux des plots de fixation et en ce que l'axe longitudinal de la bande parafoudre et les axes principaux des plots de fixation ne se coupent pas. Le système parafoudre peut en outre comporter l'une ou plusieurs des caractéristiques suivantes prises isolément ou suivant toutes combinaisons techniques possibles dans le cadre de l'invention tel que défini par les revendications.

La structure support peut être définie par un radôme, notamment un radôme d'aéronef.

La structure support peut être une structure composite, notamment un panneau comportant une âme centrale en matériau alvéolaire, telle qu'une âme en nid d'abeille ou en mousse. Cette structure composite peut être monolithique, simple « sandwich » ou « multi-sandwich ».

La bande parafoudre peut être destinée à être placée du côté de la face interne de la structure support, en étant soit directement en contact avec cette face interne, soit placée à distance de celle-ci.

Par « montée de façon désaxée par rapport aux axes principaux des plots de fixation», il faut notamment comprendre que l'axe longitudinal de la bande parafoudre n'est pas inscrit dans le plan défini par les axes principaux d'au moins deux plots de fixation. En particulier et avantageusement selon l'invention, l'axe longitudinal de la bande parafoudre et les axes principaux des plots de fixation ne se coupent pas.

Les moyens de fixation peuvent comporter des éléments intermédiaires pour le montage de la bande parafoudre. Chaque élément intermédiaire peut comporter une partie formant corps pour sa fixation à un plot de fixation et, en saillie latéralement à partir de la partie formant corps, une partie formant pince pour la fixation de la bande parafoudre.

La partie formant pince peut comporter deux branches formant pince s'étendant le long l'une de l'autre. Les deux branches formant pince peuvent comporter chacune un renfoncement, notamment sensiblement semi-cylindrique, les deux renfoncements définissant un passage traversant, notamment sensiblement cylindrique, pour la bande parafoudre.

Chaque élément intermédiaire peut comporter deux parties intermédiaires (ou brides intermédiaires), superposées l'une par rapport à l'autre. Chaque partie intermédiaire peut comporter une branche formant corps pourvue d'un orifice de passage, notamment sensiblement circulaire, pour un plot de fixation, les deux branches formant corps définissant la partie formant corps de l'élément intermédiaire, et une branche formant pince comportant un renfoncement, notamment sensiblement semi-cylindrique, les deux branches formant pince définissant la partie formant pince de l'élément intermédiaire. Les deux renfoncements peuvent définir un passage traversant, notamment cylindrique, pour la bande parafoudre. La bande parafoudre peut ainsi être prise en « sandwich » entre les deux renfoncements.

Les deux parties intermédiaires peuvent être strictement identiques. De la sorte, elles peuvent être reproductibles pour toutes les fixations de bande parafoudre, permettant ainsi un gain en termes de coûts.

En variante, la partie formant corps de l'élément intermédiaire peut être formée d'un seul tenant, à partir duquel peuvent s'étendre les deux branches formant pince pour la fixation de la bande parafoudre.

Les plots de fixation peuvent être destinés à être insérés dans des orifices réalisés dans la structure support en ayant leur partie supérieure sensiblement au niveau de la face externe de la structure support.

On entend par « partie supérieure sensiblement au niveau de la face externe de la structure support », que cette partie supérieure est au même niveau que la face externe de la structure support, c'est-à-dire que l'extrémité supérieure du plot de fixation est au niveau, ou contiguë, à la face externe de la structure support aux tolérances d'assemblage près.

Les plots de fixation peuvent être des plots conducteurs monobloc comportant dans leur partie inférieure une portion de tige filetée, destinée à passer au travers des orifices de passage des parties intermédiaires.

Les moyens de fixation peuvent en outre comporter des inserts (ou entretoises), en particulier des inserts isolants, pour permettre la fixation des plots de fixation dans la structure support. Les inserts peuvent permettre d'assurer la liaison mécanique entre la structure support, les plots de fixation et la bande parafoudre. Les inserts peuvent être associés à une résine de fixation pour permettre la fixation des plots de fixation. Les éléments intermédiaires peuvent s'appuyer au moins partiellement sur les inserts.

De plus, les moyens de fixation peuvent comporter des têtes de fixation, notamment des écrous de fixation, pour permettre la fixation des éléments intermédiaires sur les plots de fixation.

La bande parafoudre peut être apte à coulisser relativement aux éléments intermédiaires. Ainsi, la bande parafoudre peut être indépendante du perçage des orifices dans la structure support pour la fixation des plots de fixation.

La bande parafoudre est avantageusement dépourvue d'orifice de passage pour un plot de fixation.

La bande parafoudre peut être constituée par un câble multibrins ou une barre ronde découpée.

La bande parafoudre peut être sensiblement cylindrique. De plus, la bande parafoudre peut avoir une section sensiblement circulaire. De la sorte, en comparaison avec une bande parafoudre de l'art antérieur, par exemple une bande trapézoïdale, l'impact de défaut radioélectrique est plus faible. En particulier, l'invention peut permettre de diminuer le défaut radioélectrique de la bande parafoudre par rapport aux solutions de l'art antérieur de par une section sensiblement circulaire qui diminue les effets de diffraction de l'onde comparativement à une section de même surface mais rectangulaire par exemple.

Grâce à l'invention, il peut être possible d'éviter les contraintes de l'art antérieur portant sur la localisation des plots de fixation sur la structure support relativement à la bande parafoudre. Ainsi, les tolérances de montage peuvent être élargies et le montage en lui-même peut être considérablement simplifié grâce au désaxage de la bande parafoudre.

Le principe de fixation de la bande parafoudre par désaxage selon l'invention peut ainsi permettre d'une part de simplifier la fixation de la bande parafoudre, et d'autre part d'autoriser tout type de forme à la bande parafoudre et permettre notamment une forme sensiblement circulaire.

L'invention a en outre pour objet, selon un autre de ses aspects, un radôme caractérisé en ce qu'il comporte une structure support telle que définie précédemment, ou un système parafoudre tel que défini précédemment, le radôme définissant la structure support.

L'invention a encore pour objet, selon un autre de ses aspects, un aéronef caractérisé en ce qu'il comporte un radôme tel que défini précédemment.

Le radôme peut en particulier être un radôme de pointe avant de l'aéronef.

### BRÈVE DESCRIPTION DES DESSINS

L'invention pourra être mieux comprise à la lecture de la description détaillée qui va suivre, d'un exemple de mise en oeuvre non limitatif de celle-ci, ainsi qu'à l'examen des figures, schématiques et partielles, du dessin annexé, sur lequel :
- la figure 1A représente, en coupe et partiellement, un exemple de système parafoudre selon l'art antérieur,
- les figures 2A et 3A sont des vues en perspective du système parafoudre de la figure 1A, respectivement dans une configuration assemblée et une configuration éclatée,
- la figure 4A est une vue de face d'un radôme équipé de plusieurs systèmes parafoudre selon l'art antérieur sur sa face interne,
- la figure 5A est une vue agrandie de la partie A de la figure 4A,
- la figure 1B représente, en coupe et partiellement, un exemple de système parafoudre selon l'invention,

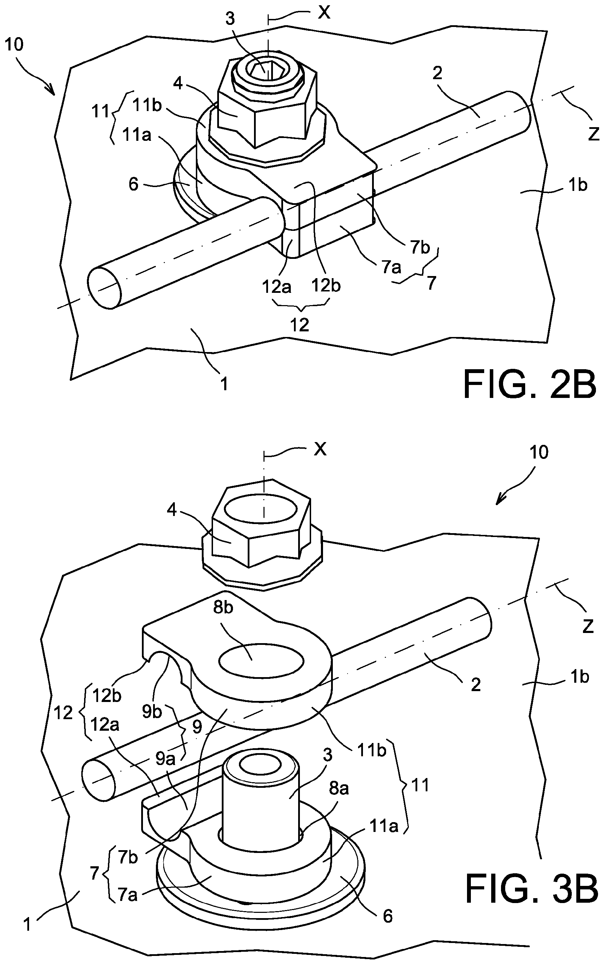

- les figures 2B et 3B sont des vues en perspective du système parafoudre de la figure 1B, respectivement dans une configuration assemblée et une configuration éclatée,

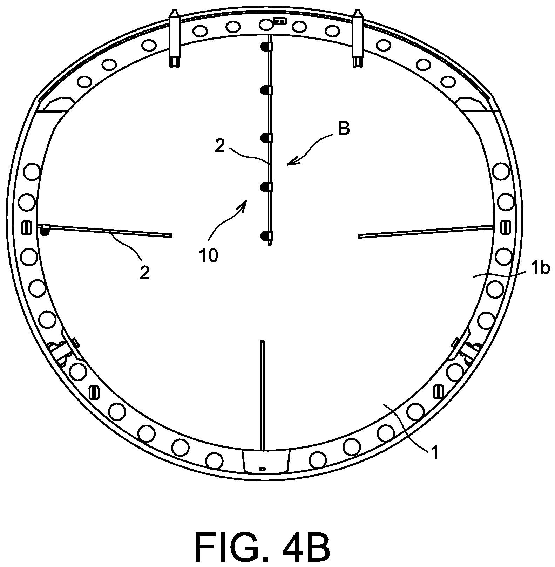

- la figure 4B est une vue de face d'un radôme équipé de plusieurs systèmes parafoudre selon l'invention sur sa face interne, et

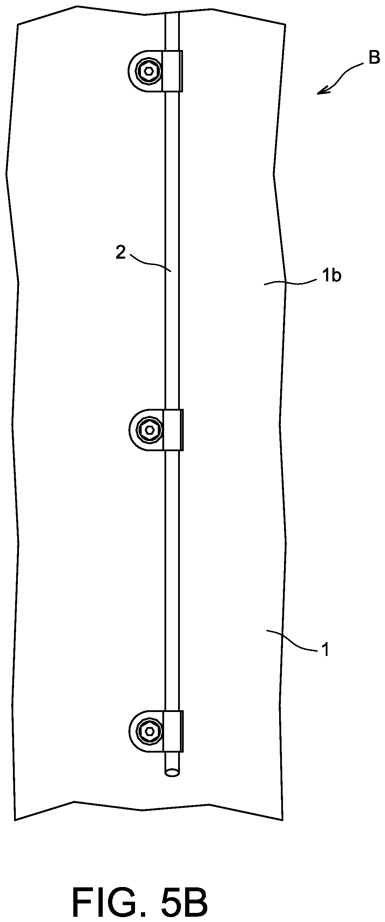

- la figure 5B est une vue agrandie de la partie B de la figure 4B.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

On décrit ci-après un exemple de mise en oeuvre de l'invention en référence aux figures 1B à 5B. Les figures 1A à 5A, relatives à l'art antérieur, ont été décrites précédemment.

On a représenté sur la figure 1B, en coupe, un exemple de système parafoudre 10 conforme à l'invention.

Le système parafoudre 10 est prévu pour être utilisé en relation avec une structure support 1 présentant une face externe 1a, destinée à être soumise à un écoulement d'air, et une face interne 1b, opposée à la face externe la.

La structure support 1 peut tout particulièrement être constituée par un radôme 1 d'un aéronef, notamment un radôme de pointe avant de l'aéronef. Le radôme 1 peut par exemple comporter une structure composite « sandwich » comprenant deux parois et une âme centrale en nid d'abeilles.

Les figures 2B et 3B sont des vues en perspective du système parafoudre 10 de la figure 1B, respectivement dans une configuration assemblée et dans une configuration éclatée.

La figure 4B représente quant à elle, en vue de face, le radôme 1 comportant une pluralité de systèmes parafoudre 10 selon l'invention, et la figure 5B représente une vue agrandie de la partie B de la figure 4B.

Comme on peut le voir sur les figures 1B, 2B et 3B, le système parafoudre 10 comporte une bande parafoudre 2 électriquement conductrice, d'axe longitudinal Z et placée du côté de la face interne 1b du radôme 1. La bande parafoudre 2 est typiquement une bande métallique, par exemple en aluminium ou en cuivre. La bande parafoudre 2 est également reliée au cadre du radôme 1 qui est lui-même relié à la jonction pointe avant de l'aéronef, pour assurer sa mise individuelle à la masse. Ainsi, un arc de foudre frappant la bande parafoudre 2 peut voir son énergie évacuer vers la masse sans affecter aucun autre élément du radôme 1.

Le système parafoudre 10 comporte en outre des moyens de fixation de la bande parafoudre 2 au radôme 1.

En particulier, les moyens de fixation comportent des plots de fixation 3 ayant des axes principaux X, qui sont insérés dans des orifices réalisés dans le radôme 1 en ayant notamment leur partie supérieure 4a sensiblement au niveau de la face externe la du radôme 1. Ces plots de fixation 3 sont en contact électrique avec la bande parafoudre 2, par exemple par le biais d'un élément intermédiaire 7 tel que décrit par la suite. De plus, les plots de fixation 3 sont fixés dans la paroi du radôme 1 via des inserts 6 et une résine de fixation 5.

La foudre qui frappe les plots de fixation 3 du côté de la face externe la du radôme 1 peut ainsi être guidée jusqu'à la bande parafoudre 2 située du côté de la face interne 1b du radôme 1.

Par ailleurs, conformément à l'invention, la bande parafoudre 2 est montée de façon désaxée par rapport aux axes principaux X des plots de fixation 3. La bande parafoudre 2 est ainsi montée relativement aux plots de fixation 3 de sorte que l'axe longitudinal Z de la bande parafoudre 2 et les axes principaux X des plots de fixation 3 ne se coupent pas. De la sorte, comme on peut le voir sur la figure 1B en coupe, l'axe transversal Y de la bande parafoudre 2, perpendiculaire à l'axe longitudinal Z de la bande parafoudre 2, se situe parallèlement à l'axe principal X du plot de fixation 3, à une distance D non nulle.

Le désaxage de la bande parafoudre 2 par rapport aux plots de fixation 3 peut permettre de faciliter le montage du système parafoudre 10 sur le radôme 1, notamment sans contrainte relative à la localisation des plots de fixation 3 par rapport à la bande parafoudre 2.

De plus, la bande parafoudre 2 est avantageusement cylindrique et peut ainsi permettre une réduction du défaut radioélectrique de la bande parafoudre 2 par rapport aux solutions de l'art antérieur.

En outre, comme on peut le voir plus particulièrement sur les figures 2B et 3B, les moyens de fixation de la bande parafoudre 2 au radôme 1 comportent des éléments intermédiaires 7, fixés aux plots de fixation 3 grâce à des écrous de fixation 4.

Chaque élément intermédiaire 7 comporte deux parties intermédiaires 7a et 7b, superposées l'une par rapport à l'autre.

Les deux parties intermédiaires 7a et 7b sont avantageusement identiques pour faciliter la reproductibilité des moyens de fixation pour plusieurs systèmes parafoudre 10.

Chaque partie intermédiaire 7a, 7b comporte une branche formant corps 11a, 11b pourvue d'un orifice de passage 8a, 8b pour un plot de fixation 3. Les deux branches formant corps 11a et 11b des parties intermédiaires 7a et 7b définissent ensemble une partie formant corps 11 de l'élément intermédiaire 7. De plus, chaque partie intermédiaire 7a, 7b comporte une branche formant pince 12a, 12b, sur laquelle figure un renfoncement 9a, 9b. Les deux branches formant pince 12a et 12b des parties intermédiaires 7a et 7b définissent ensemble une partie formant pince 12 de l'élément intermédiaire 7.

Les deux renfoncements 9a et 9b définissent entre eux un passage traversant 9 pour la bande parafoudre 2, qui permet le coulissement de la bande parafoudre 2 relativement à chaque élément intermédiaire 7. La bande parafoudre 2 peut ainsi être indépendante du perçage des orifices dans le radôme 1 pour la fixation des plots de fixation 3.

La partie formant pince 12 de chaque élément intermédiaire 7 est avantageusement située en saillie latéralement à partir de la partie formant corps 11 de l'élément intermédiaire 7, permettant de ce fait un désaxage de la bande parafoudre 2 par rapport aux plots de fixation 3.

Bien entendu, l'invention n'est pas limitée à l'exemple de réalisation qui vient d'être décrit. Diverses modifications peuvent y être apportées par l'homme du métier.

En particulier, chaque élément intermédiaire 7 pourrait être prévu avec une partie formant corps réalisée d'un seul tenant, à partir de laquelle s'étendraient les deux branches formant pince 12a et 12b pour former la partie formant pince 12 de l'élément intermédiaire 7.

L'expression « comportant un » doit être comprise comme étant synonyme de « comportant au moins un », sauf si le contraire est spécifié.

## Revendications

1. Structure support (1) d'aéronef, ayant une face externe (1a) destinée à être soumise à un écoulement d'air et une face interne (1b) opposée à la face externe (1a), la structure support (1) comportant un système parafoudre (10) comportant :
- une bande parafoudre (2) électriquement conductrice, placée du côté de la face interne (1b) de la structure support (1) en étant reliée à la masse,
- des moyens de fixation (3, 4, 6, 7) de la bande parafoudre (2) à la structure support (1), les moyens de fixation comportant des plots de fixation (3) insérés dans des orifices réalisés dans la structure support (1), ces plots de fixation (3) étant en contact électrique avec la bande parafoudre (2), **caractérisée en ce que** la bande parafoudre (2) est montée de façon désaxée par rapport aux axes principaux (X) des plots de fixation (3) et **en ce que** l'axe longitudinal (Z) de la bande parafoudre (2) et les axes principaux (X) des plots de fixation (3) ne se coupent pas.

2. Structure support selon la revendication 1, **caractérisée en ce que** les moyens de fixation (3, 4, 6, 7) comportent des éléments intermédiaires (7) pour le montage de la bande parafoudre (2), chaque élément intermédiaire (7) comportant une partie formant corps (11) pour sa fixation à un plot de fixation (3) et, en saillie latéralement à partir de la partie formant corps (11), une partie formant pince (12) pour la fixation de la bande parafoudre (2).

3. Structure support selon la revendication 2, **caractérisée en ce que** la partie formant pince (12) comporte deux branches formant pince (12a, 12b) s'étendant le long l'une de l'autre, les deux branches formant pince (12a, 12b) comportant chacune un renfoncement (9a, 9b), les deux renfoncements (9a, 9b) définissant un passage traversant (9) pour la bande parafoudre (2).

4. Structure support selon la revendication 2 ou 3, **caractérisée en ce que** chaque élément intermédiaire (7) comporte deux parties intermédiaires (7a, 7b) superposées l'une par rapport à l'autre, chaque partie intermédiaire (7a, 7b) comportant une branche formant corps (11a, 11b) pourvue d'un orifice de passage (8a, 8b) pour un plot de fixation (3), les deux branches formant corps (11a, 11b) définissant la partie formant corps (11) de l'élément intermédiaire (7), et une branche formant pince (12a, 12b) comportant un renfoncement (9a, 9b), les deux branches formant pince (12a, 12b) définissant la partie formant pince (12) de l'élément intermédiaire (7), les deux renfoncements (9a, 9b) définissant un passage traversant (9) pour la bande parafoudre (2).

5. Structure support selon l'une quelconque des revendications 2 à 4, **caractérisée en ce que** la bande parafoudre (2) est apte à coulisser relativement aux éléments intermédiaires (7).

6. Structure support selon l'une quelconque des revendications précédentes, **caractérisée en ce que** la bande parafoudre (2) est dépourvue d'orifice de passage pour un plot de fixation (3).

7. Structure support selon l'une quelconque des revendications précédentes, **caractérisée en ce que** la bande parafoudre (2) est sensiblement cylindrique.

8. Structure support selon l'une quelconque des revendications précédentes, **caractérisée en ce que** la bande parafoudre (2) a une section sensiblement circulaire.

9. Radôme (1) **caractérisé en ce qu'**il comporte une structure support (1) selon l'une quelconque des revendications précédentes.

10. Aéronef **caractérisé en ce qu'**il comporte un radôme (1) selon la revendication 9.

## Patentansprüche

1. Luftfahrzeug-Trägerstruktur (1), die eine Außenseite (1a), die dazu bestimmt ist, einem Luftstrom ausgesetzt zu sein, und eine der Außenseite (1a) entgegengesetzte Innenseite (1b) hat, wobei die Trägerstruktur (1) ein Blitzableitersystem (10) aufweist, das aufweist:
- ein elektrisch leitendes Blitzableiterband (2), das auf der Seite der Innenseite (1b) der Trägerstruktur (1) angeordnet ist, indem es mit Masse verbunden ist,
- Befestigungseinrichtungen (3, 4, 6, 7) des Blitzableiterbands (2) an der Trägerstruktur (1), wobei die Befestigungseinrichtungen Befestigungsklötze (3) aufweisen, die in in der Trägerstruktur (1) hergestellte Öffnungen eingefügt sind, wobei diese Befestigungsklötze (3) mit dem Blitzableiterband (2) in elektrischem Kontakt sind,
**dadurch gekennzeichnet, dass** das Blitzableiterband (2) bezüglich der Hauptachsen (X) der Befestigungsklötze (3) axial verschoben montiert ist, und dass die Längsachse (Z) des Blitzableiterbands (2) und die Hauptachsen (X) der Befestigungsklötze (3) sich nicht schneiden.

2. Trägerstruktur nach Anspruch 1, **dadurch gekennzeichnet, dass** die Befestigungseinrichtungen (3, 4, 6, 7) Zwischenelemente (7) für die Montage des Blitzableiterbands (2) aufweisen, wobei jedes Zwischenelement (7) einen einen Körper (11) bildenden Teil für seine Befestigung an einem Befestigungsklotz (3) und seitlich ausgehend vom einen Körper (11) bildenden Teil vorspringend einen eine Klemme (12) zur Befestigung des Blitzableiterbands (2) bildenden Teil aufweist.

3. Trägerstruktur nach Anspruch 2, **dadurch gekennzeichnet, dass** der eine Klemme (12) bildende Teil zwei eine Klemme (12a, 12b) bildende Schenkel aufweist, die sich längs aneinander erstrecken, wobei die zwei eine Klemme (12a, 12b) bildenden Schenkel je eine Vertiefung (9a, 9b) aufweisen, wobei die zwei Vertiefungen (9a, 9b) einen Durchlassdurchgang (9) für das Blitzableiterband (2) bilden.

4. Trägerstruktur nach Anspruch 2 oder 3, **dadurch gekennzeichnet, dass** jedes Zwischenelement (7) zwei übereinander angeordnete Zwischenteile (7a, 7b) aufweist, wobei jeder Zwischenteil (7a, 7b) einen einen Körper bildenden Schenkel (11a, 11b), der mit einer Durchlassöffnung (8a, 8b) für einen Befestigungsklotz (3) versehen ist, wobei die zwei einen Körper bildenden Schenkel (11a, 11b) den einen Körper (11) bildenden Teil des Zwischenelements (7) definieren, und einen eine Klemme (12a, 12b) bildenden Schenkel aufweist, der eine Vertiefung (9a, 9b) aufweist, wobei die zwei eine Klemme (12a, 12b) bildenden Schenkel den eine Klemme (12) bildenden Teil des Zwischenelements (7) definieren, wobei die zwei Vertiefungen (9a, 9b) einen Durchlassdurchgang (9) für das Blitzableiterband (2) definieren.

5. Trägerstruktur nach einem der Ansprüche 2 bis 4, **dadurch gekennzeichnet, dass** das Blitzableiterband (2) bezüglich der Zwischenelemente (7) gleiten kann.

6. Trägerstruktur nach einem der vorhergehenden Ansprüche, **dadurch gekennzeichnet, dass** das Blitzableiterband (2) keine Durchlassöffnung für einen Befestigungsklotz (3) hat.

7. Trägerstruktur nach einem der vorhergehenden Ansprüche, **dadurch gekennzeichnet, dass** das Blitzableiterband (2) im Wesentlichen zylindrisch ist.

8. Träger nach einem der vorhergehenden Ansprüche, **dadurch gekennzeichnet, dass** das Blitzableiterband (2) einen im Wesentlichen kreisförmigen Querschnitt hat.

9. Radom (1), **dadurch gekennzeichnet, dass** es eine Trägerstruktur (1) nach einem der vorhergehenden Ansprüche aufweist.

10. Luftfahrzeug, **dadurch gekennzeichnet, dass** es ein Radom (1) nach Anspruch 9 aufweist.

## Claims

1. Aircraft support structure (1), having an external face (1a) intended to be subjected to a flow of air and an internal face (1b) opposite the external face (1a), the support structure (1) comprising a lightning conductor system (10) comprising:
- an electrically conducting lightning conductor strip (2), placed on the side of the internal face (1b) of the support structure (1) while being connected to ground,
- means of fixing (3, 4, 6, 7) the lightning conductor strip (2) to the support structure (1), the fixing means comprising fixing studs (3) inserted into orifices formed in the support structure (1), said fixing studs (3) being in electrical contact with the lightning conductor strip (2),
**characterized by** the fact that the lightning conductor strip (2) is mounted in an offset manner with respect to the main axes (X) of the fixing studs (3) and by the fact that the longitudinal axis (Z) of the lightning conductor strip (2) and the main axes (X) of the fixing studs (3) do not intersect.

2. Support structure according to claim 1, **characterised in that** the fixing means (3, 4, 6, 7) comprise intermediate elements (7) for the mounting of the lightning conductor strip (2), each intermediate element (7) comprising a body forming part (11) for the fixing thereof to a fixing stud (3) and, projecting laterally from the body forming part (11), a clamp forming part (12) for the fixing of the lightning conductor strip (2).

3. Support structure according to claim 2, **characterised in that** the clamp forming part (12) comprises two clamp forming branches (12a, 12b) extending along each other, the two clamp forming branches (12a, 12b) each comprising a recess (9a, 9b), the two recesses (9a, 9b) defining a through passage (9) for the lightning conductor strip (2).

4. Support structure according to claim 2 or 3, **characterised in that** each intermediate element (7) comprises two intermediate parts (7a, 7b) superimposed one on top of the other, each intermediate part (7a, 7b) comprising a body forming branch (11a, 11b) provided with a through orifice (8a, 8b) for a fixing stud (3), the two body forming branches (11a, 11b) defining the body forming part (11) of the intermediate element (7), and a clamp forming branch (12a, 12b) comprising a recess (9a, 9b), the two clamp forming branches (12a, 12b) defining the clamp forming part (12) of the intermediate element (7), the two recesses (9a, 9b) defining a through passage (9) for the lightning conductor strip (2).

5. Support structure according to any of claims 2 to 4, **characterised in that** the lightning conductor strip (2) is able to slide relatively to the intermediate elements (7).

6. Support structure according to any of the preceding claims, **characterised in that** the lightning conductor strip (2) is devoid of through orifice for a fixing stud (3).

7. Support structure according to any of the preceding claims, **characterised in that** the lightning conductor strip (2) is substantially cylindrical.

8. Support structure according to any of the preceding claims, **characterised in that** the lightning conductor strip (2) has a substantially circular section.

9. Radome (1) **characterised in that** it comprises a support structure (1) according to any of the preceding claims.

10. Aircraft **characterised in that** it comprises a radome (1) according to claim 9.
